# EUROPEAN PATENT SPECIFICATION

(11) **EP 3 579 467 B1**
(45) Date of publication and mention of the grant of the patent: **19.05.2021**
(21) Application number: 18763177.5
(22) Date of filing: 01.03.2018
(51) Int. Cl.: H04W 74/00, H04W 84/12

(54) **INFORMATION TRANSMISSION METHOD, USER EQUIPMENT AND NETWORK EQUIPMENT**
INFORMATIONSÜBERTRAGUNGSVERFAHREN, BENUTZERGERÄT UND NETZWERKGERÄT
PROCÉDÉ DE TRANSMISSION D'INFORMATIONS, ÉQUIPEMENT UTILISATEUR ET ÉQUIPEMENT DE RÉSEAU

(30) Priority: 10.03.2017 CN 201710142158
(43) Date of publication of application: 11.12.2019
(73) Proprietor: Huawei Technologies Co., Ltd., Longgang District Shenzhen, Guangdong 518129 (CN)
(72) Inventor: HAN, Xiao, Shenzhen Guangdong 518129 (CN); XIN, Yan, Shenzhen Guangdong 518129 (CN); CALCEV, George, Shenzhen Guangdong 518129 (CN)
(74) Representative: Goddar, Heinz J.
(86) International application number: PCT/CN2018/077729
(87) International publication number: WO 2018/161837

(56) References cited:
- WO-A1-2015/038175
- CN-A- 104 918 228
- CN-A- 105 101 445
- CN-A- 105 557 009
- ANONYMOUS: "802.11ad-2012 IEEE Standard for Information technology--Telecommunications and information exchange between systems--Local and metropolitan area networks--Specific requirements-Part 11: Wireless LAN Medium Access Control (MAC) and Physical Layer (PHY) Specifications Amendment 3: Enhancements for Ver", IEEE STANDARD, IEEE, PISCATAWAY, NJ, USA, vol. 802.11ad-2012, 28 December 2012 (2012-12-28), pages 1-628, XP068045729, ISBN: 978-0-7381-8096-0
- SIMONE MERLIN (QUALCOMM): "Duration and MAC Padding for MU PPDUs", IEEE DRAFT; 11-15-0876-01-00AX-DURATION-AND-MAC-PADDIN G-FOR-MU-PPDUS, IEEE-SA MENTOR, PISCATAWAY, NJ USA , vol. 802.11ax, no. 1 16 July 2015 (2015-07-16), pages 1-16, XP068119992, Retrieved from the Internet: URL:https://mentor.ieee.org/802.11/dcn/15/ 11-15-0876-01-00ax-duration-and-mac-paddin g-for-mu-ppdus.pptx [retrieved on 2015-07-16]

## Description

### TECHNICAL FIELD

Embodiments of this application relate to communications technologies, and in particular, to an information transmission method, user equipment, and a network device.

### BACKGROUND

Currently, most wireless local area networks (Wireless Local Area Network, WLAN) operate in frequency bands of 2.4 GHz and 5 GHz. Spectrum resources in the frequency bands become very insufficient as a quantity of devices that use the frequency bands increases, while a millimeter-wave band of 60 GHz has a large quantity of available spectrum resources. Therefore, the frequency band of 60 GHz will be widely used in the future.

Because the millimeter-wave band of 60 GHz has a very great path loss, usually a communication distance based on the millimeter-wave band of 60 GHz is relatively short. A directional communications technology of beamforming (Beamforming, BF) may be used to centralize a transmit signal of a transmit antenna on a very small narrow beam, and enable a receive antenna to receive a signal in a very narrow beam range, so as to increase the communication distance. Within a beacon transmission interval (Beacon Transmission Interval, BTI) of one beacon interval (Beacon Interval, BI), a network device may perform initiator sector sweep (Initiator TXSS, I-TXSS). Within an association beamforming training (Association BeamForming Training, A-BFT) interval of the BI, user equipment may perform responder sector sweep (Responder TXSS, R-TXSS), and receive a sector sweep feedback (Sector Sweep Feedback, SSW-Feedback) frame sent by the network device. Within an announcement transmission interval (Announcement Transmission Interval, ATI) of the BI, the network device may schedule a transmit opportunity for the user equipment. Within a data transfer interval (Data Transfer Interval, DTI) of the BI, data may be transferred between the network device and the user equipment.

With continuous development of communications technologies, the network device may further schedule a plurality of user equipments on a plurality of channels within the ATI. However, information transmitted between the network device and different user equipments on different channels may have different lengths. Consequently, interference is caused because the network device asynchronously receives and sends information with different lengths on different channels, and communication efficiency and communication quality are affected.
The IEEE Standard 802.11ad-2012 - IEEE Standard for Information technology - Telecommunications and information exchange between systems - Local and metropolitan area networks - Specific requirements - Part 11: Wireless LAN Medium Access Control (MAC) and Physical Layer (PHY) Specifications - Amendment 3: Enhancements for Very High Throughput in the 60 GHz Band, IEEE, 28 December 2012, defines modifications to both the IEEE 802.11 physical layers (PHYs) and the IEEE 802.11 medium access control layer (MAC) to enable operation in frequencies around 60 GHz and capable of very high throughput.
In the technical presentation "Duration and MAC Padding for MU PPDUs" by Simone Merlin within the IEEE 802.11ax Task Group, 16 July 2015, it is suggested that the transmission from all the stations in an UL MU PPDU shall end at the time indicated in trigger frame. The A-MPDU padding per each station follows the 802.11ac procedure.

### SUMMARY

Embodiments of this application provide an information transmission method, user equipment, and a network device, so as to reduce interference caused by asynchronization between information receiving and sending performed by the network device on different channels, and improve communication efficiency and communication quality.

According to a first aspect, an embodiment of this application provides an information transmission method, including:
determining, by user equipment, a channel corresponding to the user equipment within an announcement transmission interval (ATI); and receiving, on the channel corresponding to the user equipment within the ATI, a request frame sent by a network device, where the request frame includes frame length indication information; and
sending, by the user equipment based on the frame length indication information, a first response frame to the network device on the channel corresponding to the user equipment within the ATI, where a length of the first response frame is a frame length corresponding to the frame length indication information.

According to the first aspect, before the sending, by the user equipment based on the frame length indication information, a first response frame to the network device on the channel corresponding to the user equipment within the ATI, the method may further include:
comparing, by the user equipment, a length of a to-be-sent second response frame with the frame length corresponding to the frame length indication information; and
if the length of the second response frame is less than the frame length corresponding to the frame length indication information, adding, by the user equipment, padding information to the second response frame to obtain the first response frame, so that the length of the first response frame is the frame length corresponding to the frame length indication information.

Optionally, the method may further include:
if the length of the second response frame is greater than the frame length corresponding to the frame length indication information, compressing or truncating, by the user equipment, the second response frame to obtain the first response frame, so that the length of the first response frame is the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame; and
the first response frame is any one of a service period request (SPR) frame, a clear to send (CTS) frame, and an ACK frame.

According to a second aspect, an embodiment of this application provides an information transmission method, including:
determining, by a network device, a channel corresponding to user equipment within an announcement transmission interval (ATI);
sending, by the network device, a request frame to the user equipment on the channel corresponding to the user equipment within the ATI, where the request frame includes frame length indication information; and
receiving, by the network device on the channel corresponding to the user equipment within the ATI, a first response frame sent by the user equipment based on the frame length indication information, where a length of the first response frame is a frame length corresponding to the frame length indication information.

According to the second aspect, the first response frame is a response frame obtained by the user equipment by adding padding information to a to-be-sent second response frame when a length of the second response frame is less than the frame length corresponding to the frame length indication information.

Optionally, the first response frame is a response frame obtained by the user equipment by compressing or truncating a to-be-sent second response frame when a length of the second response frame is greater than the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame; and
the response frame is any one of a service period request SPR frame, a clear to send (CTS) frame, and an ACK frame.

According to a third aspect, an embodiment of this application further provides an information transmission apparatus, including:
a processing module, configured to determine a channel corresponding to user equipment within an announcement transmission interval (ATI);
a receiving module, configured to receive, on the channel corresponding to the user equipment within the ATI, a request frame sent by a network device, where the request frame includes frame length indication information; and
a sending module, configured to send, based on the frame length indication information, a first response frame to the network device on the channel corresponding to the user equipment within the ATI, where a length of the first response frame is a frame length corresponding to the frame length indication information.

According to the third aspect, the processing module is further configured to: compare a length of a to-be-sent second response frame with the frame length corresponding to the frame length indication information; and if the length of the second response frame is less than the frame length corresponding to the frame length indication information, add padding information to the second response frame to obtain the first response frame, so that the length of the first response frame is the frame length corresponding to the frame length indication information.

Optionally, the processing module is further configured to: if the length of the second response frame is greater than the frame length corresponding to the frame length indication information, compress or truncate the second response frame to obtain the first response frame, so that the length of the first response frame is the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame; and
the first response frame is any one of a service period request (SPR) frame, a clear to send (CTS) frame, and an ACK frame.

According to a fourth aspect, an embodiment of this application further provides an information transmission apparatus, including:
a processing module, configured to determine a channel corresponding to user equipment within an announcement transmission interval (ATI);
a sending module, configured to send a request frame to the user equipment on the channel corresponding to the user equipment within the ATI, where the request frame includes frame length indication information; and
a receiving module, configured to receive, on the channel corresponding to the user equipment within the ATI, a first response frame sent by the user equipment based on the frame length indication information, where a length of the first response frame is a frame length corresponding to the frame length indication information.

According to the fourth aspect, the first response frame is a response frame obtained by the user equipment by adding padding information to a to-be-sent second response frame when a length of the second response frame is less than the frame length corresponding to the frame length indication information.

Optionally, the first response frame is a response frame obtained by the user equipment by compressing or truncating a to-be-sent second response frame when a length of the second response frame is greater than the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame; and
the response frame is any one of a service period request (SPR) frame, a clear to send (CTS) frame, and an ACK frame.

According to a fifth aspect, an embodiment of this application further provides user equipment, including a processor, a receiver, and a transmitter, where the processor is connected to the receiver, and the processor is further connected to the transmitter.

The processor is configured to determine a channel corresponding to the user equipment within an announcement transmission interval (ATI).

The receiver is configured to receive, on the channel corresponding to the user equipment within the ATI, a request frame sent by a network device, where the request frame includes frame length indication information.

The transmitter is configured to send, based on the frame length indication information, a first response frame to the network device on the channel corresponding to the user equipment within the ATI, where a length of the first response frame is a frame length corresponding to the frame length indication information.

The processor is further configured to: before the transmitter sends, based on the frame length indication information, the first response frame to the network device on the channel corresponding to the user equipment within the ATI, compare a length of a to-be-sent second response frame with the frame length corresponding to the frame length indication information; and if the length of the second response frame is less than the frame length corresponding to the frame length indication information, add padding information to the second response frame to obtain the first response frame, so that the length of the first response frame is the frame length corresponding to the frame length indication information.

Optionally, the processor is further configured to: if the length of the second response frame is greater than the frame length corresponding to the frame length indication information, compress or truncate the second response frame to obtain the first response frame, so that the length of the first response frame is the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame.

Optionally, the first response frame is any one of a service period request (SPR) frame, a clear to send (CTS) frame, and an ACK frame.

According to a sixth aspect, an embodiment of this application further provides a network device, including a processor, a transmitter, and a receiver, where the processor is connected to the transmitter, and the processor is further connected to the receiver.

The processor is configured to determine a channel corresponding to user equipment within an announcement transmission interval (ATI).

The transmitter is configured to send a request frame to the user equipment on the channel corresponding to the user equipment within the ATI, where the request frame includes frame length indication information.

The receiver is configured to receive, on the channel corresponding to the user equipment within the ATI, a first response frame sent by the user equipment based on the frame length indication information, where a length of the first response frame is a frame length corresponding to the frame length indication information.

The first response frame is a response frame obtained by the user equipment by adding padding information to a to-be-sent second response frame when a length of the second response frame is less than the frame length corresponding to the frame length indication information.

In another example, the first response frame is a response frame obtained by the user equipment by compressing or truncating a to-be-sent second response frame when a length of the second response frame is greater than the frame length corresponding to the frame length indication information.

Optionally, the frame length indication information is located in a reserved field or a preset information element in the request frame.

Optionally, the request frame is any one of a management frame, a grant frame, a poll frame, an acknowledge (ACK) frame, and a request to send (RTS) frame; and
the response frame is any one of a service period request (SPR) frame, a clear to send (CTS) frame, and an ACK frame.

According to a seventh aspect, an embodiment of this application further provides a computer program product, and the computer program product includes corresponding program code used to perform any information transmission method provided in the first aspect of the embodiments of this application.

According to an eighth aspect, an embodiment of this application further provides a computer program product, and the computer program product includes corresponding program code used to perform any information transmission method provided in the second aspect of the embodiments of this application.

According to a ninth aspect, an embodiment of this application further provides a computer readable storage medium, and the storage medium is configured to store a computer program product. The computer program product includes program code, and the program code may include corresponding program code used to perform any information transmission method provided in the first aspect of the embodiments of this application.

According to a tenth aspect, an embodiment of this application further provides a computer readable storage medium, and the storage medium is configured to store a computer program product. The computer program product includes program code, and the program code may include corresponding program code used to perform any information transmission method provided in the second aspect of the embodiments of this application.

According to the information transmission method, the user equipment, and the network device provided in the embodiments of this application, the user equipment and the network device each may determine the channel corresponding to the user equipment within the ATI, so that the user equipment can receive, on the channel corresponding to the user equipment within the ATI, the request frame that is sent by the network device and that includes the frame length indication information, and then send, based on the frame length indication information, the first response frame to the network device on the channel corresponding to the user equipment within the ATI. The length of the first response frame may be the frame length corresponding to the frame length indication information. In the method, the request frame sent by the network device on the channel corresponding to the user equipment within the ATI may include the frame length indication information, and a length of a response frame sent by the user equipment to the network device on the channel corresponding to the user equipment within the ATI is the frame length corresponding to the frame length indication information. Therefore, according to the method in the embodiments of this application, response frames returned by different user equipments on different channels may have a same length, thereby effectively preventing different user equipments from asynchronously receiving information on different channels, reducing interference caused when the network device asynchronously receives and sends information on different channels, and improving communication efficiency and communication quality.

### BRIEF DESCRIPTION OF DRAWINGS

FIG 1 is a schematic structural diagram of a network system to which embodiments of this application are applicable;
FIG 2 is a flowchart of an information transmission method according to Embodiment 1 of this application;
FIG 3 is a flowchart of an information transmission method according to Embodiment 2 of this application;
FIG 4 is a schematic structural diagram of a UL PPDU information element according to Embodiment 2 of this application;
FIG 5 is an information exchange diagram between an AP and a station on each channel according to Embodiment 2 of this application;
FIG 6 is another information exchange diagram between an AP and a station on each channel according to Embodiment 2 of this application;
FIG 7 is a schematic structural diagram of a response start time element according to Embodiment 2 of this application;
FIG 8 is a schematic structural diagram of a response offset time element according to Embodiment 2 of this application;
FIG 9 is a flowchart of another information transmission method according to Embodiment 2 of this application;
FIG 10 is a flowchart of an information transmission method according to Embodiment 3 of this application;
FIG 11 is a schematic structural diagram of a request frame of one type according to Embodiment 3 of this application;
FIG 12 is a schematic structural diagram of an information transmission apparatus according to Embodiment 4 of this application;
FIG 13 is a schematic structural diagram of an information transmission apparatus according to Embodiment 5 of this application;
FIG 14 is a schematic structural diagram of user equipment according to Embodiment 6 of this application;
FIG 15 is a schematic structural diagram of a computer program product according to Embodiment 6 of this application;
FIG 16 is a schematic structural diagram of a computer readable storage medium according to Embodiment 6 of this application;
FIG 17 is a schematic structural diagram of a network device according to Embodiment 7 of this application;
FIG 18 is a schematic structural diagram of a computer program product according to Embodiment 7 of this application; and
FIG 19 is a schematic structural diagram of a computer readable storage medium according to Embodiment 7 of this application.

### DESCRIPTION OF EMBODIMENTS

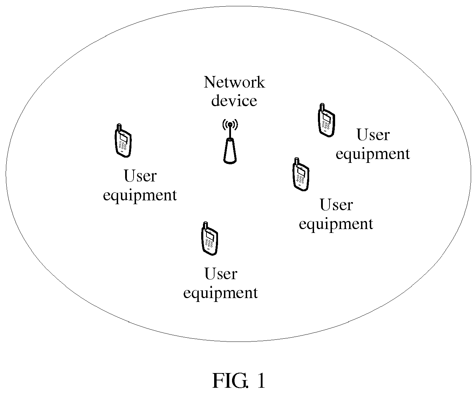

An information transmission method, a network device, and user equipment provided in the embodiments of this application are applicable to a WLAN system, and in particular, to a WLAN system in the 802.11 ad standard, the 802.11 ay standard, and a subsequently improved standard. The information transmission method is applicable to a network scenario of user equipment having a plurality of access types. FIG 1 is a schematic structural diagram of a network system to which embodiments of this application are applicable. As shown in FIG 1, the network system to which the information transmission method is applicable may include, for example, one network device and at least one user equipment. The network device may be, for example, a personal basic service set control point (Personal Basic Service Set Control Point, PCP)/access point (Access Point, AP). The user equipment may be a station (Station, STA). The user equipment in FIG 1 may be a directional multi-gigabit station (Directional Multi-Gigabit Station, DMG STA), or may be an enhanced directional multi-gigabit station (Enhanced Directional Multi-Gigabit Station, EDMG STA), or certainly may be a station of another type. The DMG station may be a station corresponding to the 802.11ad standard, and the EDMG station may be a station corresponding to the 802.11ay standard.

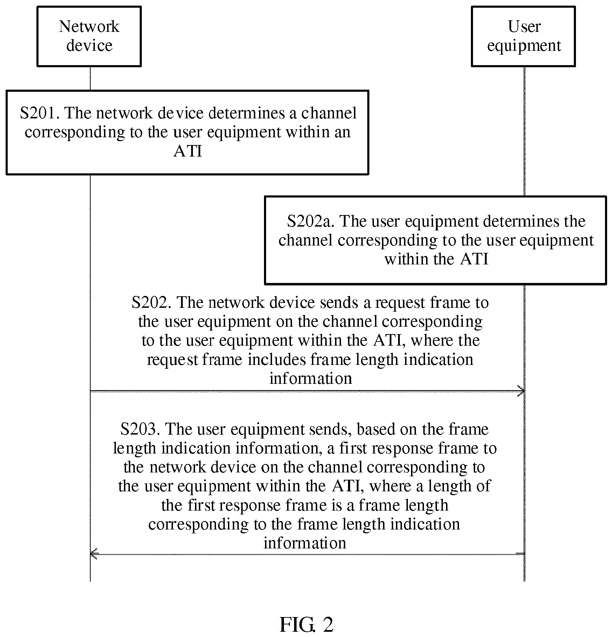

Embodiment 1 of this application provides an information transmission method. FIG 2 is a flowchart of the information transmission method according to Embodiment 1 of this application. As shown in FIG 2, the method may include the following steps.

S201. A network device determines a channel corresponding to user equipment within an ATI.

Specifically, the user equipment may be the EDMG station shown in FIG 1. The network device may determine, according to a preset rule that is the same as that on a user equipment side, the channel corresponding to the user equipment within the ATI, or may determine, by using a preset rule, the channel corresponding to the user equipment within the ATI, and indicate the channel to the user equipment, so that the user equipment determines, according to the indication of the network device, the channel corresponding to the user equipment within the ATI.

For each of a plurality of user equipments, the network device may determine, in a manner similar to the manner in S201, a channel corresponding to the user equipment within the ATI. In other words, in S201, the network device may determine the channel corresponding to each of the plurality of user equipments within the ATI. Different user equipments correspond to different channels at a same moment within the ATI.

The channel corresponding to the user equipment within the ATI may be a primary channel or a secondary channel in a plurality of preset channels. The plurality of preset channels may include, for example, four channels corresponding to the 802.11ad standard, or may include six channels corresponding to the 802.11 ay standard. Each channel may be a channel of 2.16 GHz. Certainly, the plurality of preset channels may be alternatively a plurality of channels corresponding to another communication standard, and the foregoing description is merely an example.

S202. The network device sends a request frame to the user equipment on the channel corresponding to the user equipment within the ATI, where the request frame includes frame length indication information.

The network device may send the request frame to the user equipment on the channel that corresponds to the user equipment within the ATI and that is determined in S201. The request frame may be a request frame corresponding to the ATI, such as a management frame, a grant (Grant) frame, a poll (Poll) frame, an acknowledge (Acknowledge, ACK) frame, or a request to send (Request To Send, RTS) frame.

Because different user equipments correspond to different channels at a same moment within the ATI, for the different user equipments, the network device may send a request frame to one user equipment on a channel corresponding to the user equipment within the ATI, and send a request frame to another user equipment on a channel corresponding to the another user equipment within the ATI.

In other words, the network device may send, to a plurality of user equipments on a plurality of channels within the ATI, request frames corresponding to the user equipments; and receive, on the plurality of channels, response frames returned by the plurality of user equipments. However, response frames returned by different user equipments on different channels may have different lengths. Consequently, information interference is caused by asynchronization between receiving and sending performed on different channels corresponding to different user equipments.

Therefore, in the solution in this embodiment of this application, the request frame sent by the network device to each user equipment on the channel corresponding to the user equipment within the ATI may include frame length indication information. The frame length indication information may be used to indicate length information or the like of a response frame returned by each user equipment. Request frames sent by the network device to different user equipments may include same frame length indication information.

To ensure that the user equipment can receive, on the channel corresponding to the user equipment within the ATI, the request frame sent by the network device, before S202 in which the network device sends a request frame to the user equipment on the channel corresponding to the user equipment within the ATI, the method may further include the following step:

S202a. The user equipment determines the channel corresponding to the user equipment within the ATI.

Specifically, the user equipment may determine, according to a preset rule that is the same as that on a network device side, the channel corresponding to the user equipment within the ATI; or may determine, according to an indication of the network device, the channel corresponding to the user equipment within the ATI. After determining the channel corresponding to the user equipment within the ATI, the user equipment may listen on the channel corresponding to the user equipment within the ATI, so as to receive the request frame sent by the network device on the channel corresponding to the user equipment within the ATI.

S203. The user equipment sends, based on the frame length indication information, a first response frame to the network device on the channel corresponding to the user equipment within the ATI, where a length of the first response frame is a frame length corresponding to the frame length indication information.

Specifically, after receiving the request frame, the user equipment may determine, based on a type of the request frame, a type of a response frame to be sent to the network device, and then send the response frame of the corresponding type to the network device on the channel corresponding to the user equipment within the ATI. The first response frame may be a response frame corresponding to the ATI, for example, a response frame of any type such as a service period request (Service Period Request, SPR) frame, a clear to send (Clear To Send, CTS) frame, or an ACK frame.

The user equipment may determine the frame length corresponding to the frame length indication information based on the frame length indication information, and then send the first response frame to the network device on the channel corresponding to the user equipment within the ATI, so that the length of the first response frame is the frame length corresponding to the frame length indication information.

For the network device, the network device may receive, on the channel corresponding to the user equipment within the ATI, the first response frame sent by the user equipment based on the frame length indication information. For each of a plurality of user equipments, the network device may receive, on a channel corresponding to the user equipment within the ATI, a response frame sent by the user equipment based on the frame length indication information. In other words, the network device receives, on a channel corresponding to one user equipment within the ATI, a response frame sent by the user equipment based on the frame length indication information, and receives, on a channel corresponding to another user equipment within the ATI, a response frame sent by the another user equipment based on the frame length indication information.

Therefore, the network device may send request frames to corresponding user equipments within the ATI through different channels corresponding to the user equipments, and receive, within the ATI through the different channels corresponding to the user equipments, response frames sent by the corresponding user equipments, so as to schedule a plurality of user equipments on a plurality of channels at a same moment within the ATI. The request frame sent by the network device to each user equipment on the channel corresponding to the user equipment within the ATI may include the frame length indication information, and a length of the response frame sent by each user equipment to the network device on the channel corresponding to the user equipment within the ATI is the frame length indication information. Therefore, according to the method in this embodiment of this application, response frames returned by different user equipments on different channels may have a same length.

In the information transmission method provided in Embodiment 1 of this application, the user equipment and the network device each may determine the channel corresponding to the user equipment within the ATI, so that the user equipment can receive, on the channel corresponding to the user equipment within the ATI, the request frame that is sent by the network device and that includes the frame length indication information, and then send, based on the frame length indication information, the first response frame to the network device on the channel corresponding to the user equipment within the ATI. The length of the first response frame may be the frame length corresponding to the frame length indication information. In the method, the request frame sent by the network device on the channel corresponding to the user equipment within the ATI may include the frame length indication information, and the length of the response frame sent by the user equipment to the network device on the channel corresponding to the user equipment within the ATI is the frame length indication information. Therefore, according to the method in this embodiment of this application, response frames returned by different user equipments on different channels may have a same length, thereby effectively avoiding asynchronization between receiving and sending caused because the response frames returned by the different user equipments on the different channels have different lengths, reducing interference caused when the network device receives and sends information on different channels, and improving communication efficiency and communication quality.

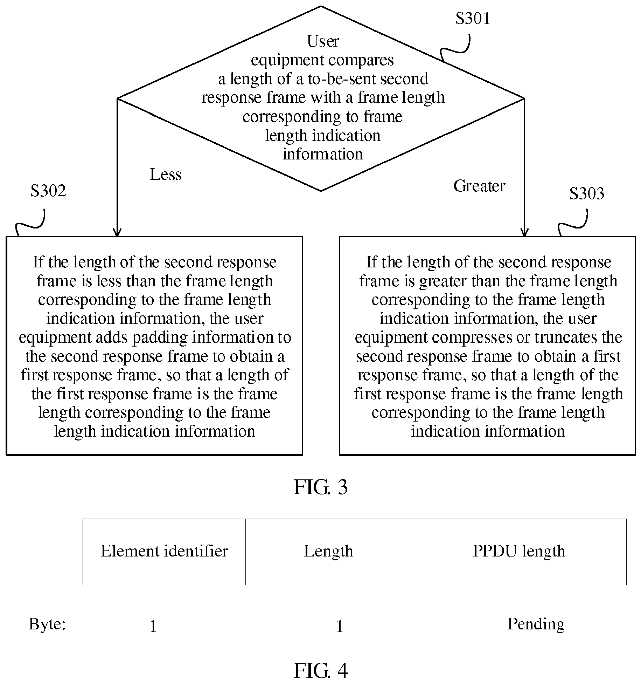

FIG 3 is a flowchart of an information transmission method according to Embodiment 2 of this application. Optionally, as shown in FIG 3, before S203 in which the user equipment sends, based on the frame length indication information, a first response frame to the network device on the channel corresponding to the user equipment within the ATI, the method may further include the following steps.

S301. The user equipment compares a length of a to-be-sent second response frame with the frame length corresponding to the frame length indication information.

After receiving the request frame, the user equipment may first need to determine a length of to-be-sent second response frame and the frame length corresponding to the frame length indication information, and then compare the length of the to-be-sent second response frame with the frame length corresponding to the frame length indication information.

S302. If the length of the second response frame is less than the frame length corresponding to the frame length indication information, the user equipment adds padding information to the second response frame to obtain the first response frame, so that the length of the first response frame is the frame length corresponding to the frame length indication information.

The user equipment may add the padding information to a physical layer or a medium access control (Medium Access Control, MAC) layer of the second response frame to obtain the first response frame. The padding information may be located in a reserved field in the request frame.

If the user equipment adds the padding information to the physical layer of the second response frame, the padding information may be physical padding (PHY padding) information. If the user equipment adds the padding information to the MAC layer of the second response frame, the padding information may be MAC padding information, such as end of frame padding (End Of Frame padding, EOF padding) information.

Optionally, the method may further include the following step:

S303. If the length of the second response frame is greater than the frame length corresponding to the frame length indication information, the user equipment compresses or truncates the second response frame to obtain the first response frame, so that the length of the first response frame is the frame length corresponding to the frame length indication information.

Certainly, if the length of the second response frame is greater than the frame length corresponding to the frame length indication information, the user equipment may not send a response frame to the network device, or may directly send the second response frame as the first response frame.

In the method in this embodiment of this application, when the length of the to-be-sent second response frame is less than the frame length corresponding to the frame length indication information, the user equipment adds the padding information to the second response frame to obtain the first response frame; in another example, when the length of the second response frame is greater than the frame length corresponding to the frame length indication information, the user equipment may compress or truncate the second response frame to obtain the first response frame, so that a length of a response frame sent by the user equipment to the network device can be the frame length corresponding to the frame length indication information. Therefore, response frames returned by different user equipments on different channels have a same length, thereby effectively avoiding asynchronization between receiving and sending caused because the response frames returned by the different user equipments on the different channels have different lengths, reducing interference caused when the network device receives and sends information on different channels, and improving communication efficiency and communication quality.

Optionally, the frame length indication information may be located in at least one bit in a reserved field in the request frame or at least one bit in a preset information element (Information Element, IE) in the request frame.

The preset information element may be a physical layer protocol data unit length (Physical layer Protocol Data Unit length, PPDU length) field or the like in an uplink physical layer protocol data unit (UpLink Physical layer Protocol Data Unit, UL PPDU) information element in the request frame.

The reserved field may be reserved bits (reserved bits) in the request frame, and the preset information element may be a newly added information element in the request frame.

For example, FIG 4 is a schematic structural diagram of a UL PPDU information element according to Embodiment 2 of this application. As shown in FIG 4, the UL PPDU information element may include a 1-byte element identifier (element ID) field, a 1-byte length field, and a PPDU length field including a to-be-determined quantity of bytes. The PPDU length field may include one or more bytes.

The frame length indication information may be located in, for example, at least one bit in the PPDU length field in the UL PPDU information element shown in FIG 4.

Optionally, some control frames may not include sufficient reserved bits, and cannot carry a newly added information element. Therefore, if the control frames each are used as a request frame, the frame length indication information may be located in at least one bit in a control trailer (Control Trailer, CT) field in the request frame.

The control trailer field may be located in three types of frames: a Clear To Send_Denial To Send (Clear To Send_Denial To Send, CTS_DTS) frame, a GRANT_Request To Send_Clear To Send Toself (GRANT_Request To Send_Clear To Send Toself, GRANT_RTS_CTS2self) frame, and an SPR frame. Control trailer fields in different types of frames may have different frame structures. For example, if the control trailer field is located in the CTS DTS frame, the control trailer field may include 113 reserved bits. If the control trailer field is located in the GRANT_RTS_CTS2self frame, the control trailer field may include 30 reserved bits. If the control trailer field is located in the SPR frame, the control trailer field may include 114 reserved bits.

If the request frame is a grant frame or an RTS frame, the control trailer field in the request frame may include 30 reserved bits, and the frame length indication information may be located in at least one bit in the control trailer field.

Optionally, in addition to the reserved fields, the control trailer field in the request frame may further include some fields such as a channel aggregation (Channel Aggregation) field, a bandwidth (Bandwidth, BW) field, and a primary channel number (Primary Channel Number) field, and these fields may not function within the ATI. Therefore, these fields may also be referred to as idle fields in the control trailer field in the request frame within the ATI.

Therefore, the frame length indication information may be located in at least one bit in the idle field in the control trailer field in the request frame within the ATI. The idle field may include at least one of the channel aggregation field, the BW field, the primary channel number field, and the like.

Optionally, the request frame may further include usage indication information. The usage indication information may be located in one preset bit in the control trailer field in the request frame.

The user equipment may determine the usage indication information based on a value of the preset bit in the control trailer field in the request frame, and then determine whether the frame length indication information is located in the idle field in the control trailer field in the request frame within the ATI.

In this embodiment of this application, the network device may send, to a plurality of user equipments on a plurality of channels within the ATI, request frames corresponding to the user equipments. However, request frames corresponding to different user equipments on different channels may have different lengths. Therefore, different user equipments may return response frames to the network device at different moments. Consequently, one user equipment receives, on a channel corresponding to the user equipment, a request frame sent by the network device, while another user equipment returns a response frame to the network device on a channel corresponding to the another user equipment. As a result, information interference is caused by asynchronization between information receiving and sending performed on different channels corresponding to different user equipments.

Optionally, to avoid receiving and sending asynchronization caused by a request frame length, in the method in this embodiment of this application, the request frames sent by the network device to the plurality of user equipments have a same length. In other words, duration fields (Duration field) in request frames received by different user equipments have a same value. Therefore, response frames sent by different user equipments to the network device on respectively corresponding channels may have a same length.

A value of a duration field in the first response frame that is sent by the user equipment to the network device on the channel corresponding to the user equipment within the ATI may be a difference between a value of a duration field in the request frame and a preset time interval. The preset time interval may be a time interval between a moment at which the user equipment receives the request frame and a moment at which the user equipment sends the first response frame. The preset time interval may be, for example, a X interframe space (X Interframe Space, XIFS), such as a short interframe space (Short Interframe Space, SIFS).

Optionally, to avoid receiving and sending asynchronization caused by a request frame length, in the method in this embodiment of this application, the request frame sent by the network device to the user equipment may include padding information.

Specifically, the padding information may be located at a physical layer or a MAC layer of the request frame. If the padding information is located at the physical layer of the request frame, the padding information may be physical padding information; or if the padding information is located at the MAC layer of the request frame, the padding information may be MAC padding information, such as EOF padding information.

Request frames simultaneously sent by the network device to different user equipments may have a same length, or may have different lengths. In the method, the network device may determine, based on information such as lengths of request frames to be sent to all user equipments and used modulation and coding schemes (Modulation and Coding Scheme, MCS), whether request frames to be sent to all the user equipments have a same length. If the request frames to be sent to all the user equipments have the same length, it may be determined that no asynchronization problem occurs. Therefore, the network device may add the padding information to a remaining request frame based on a preset frame length such as a longest request frame length, so that request frames simultaneously sent by the network device to different user equipments within the ATI have a same length, or a frame length difference falls within a preset range.

Padding information in the request frames corresponding to the different user equipments may have a same length, or may have different lengths.

Correspondingly, S203 in which the user equipment sends, based on the frame length indication information, a first response frame to the network device on the channel corresponding to the user equipment within the ATI may include the following:

After receiving an XIFS of the request frame, the user equipment sends, based on the frame length indication information, the first response frame to the network device on the channel corresponding to the user equipment within the ATI.

Specifically, the preset interframe space may be, for example, the SIFS. Request frames simultaneously sent by the network device to different user equipments have a same length, or a frame length difference falls within the preset range. After receiving the preset interframe space of the request frame including the padding information, the user equipment sends, based on the frame length indication information, the first response frame to the network device on the channel corresponding to the user equipment within the ATI. Therefore, the network device may simultaneously send request frames to all user equipments, and simultaneously receive response frames returned by all the user equipments, thereby effectively avoiding interference caused because the network device sends information on one channel and receives information on another channel; in other words, avoiding asynchronization between receiving and sending.

Because the response frames returned by all the user equipments to the network device may also have different lengths, the network device may start next-round information exchange after receiving the response frames sent by all the user equipments, thereby avoiding asynchronization caused by different response frame lengths.

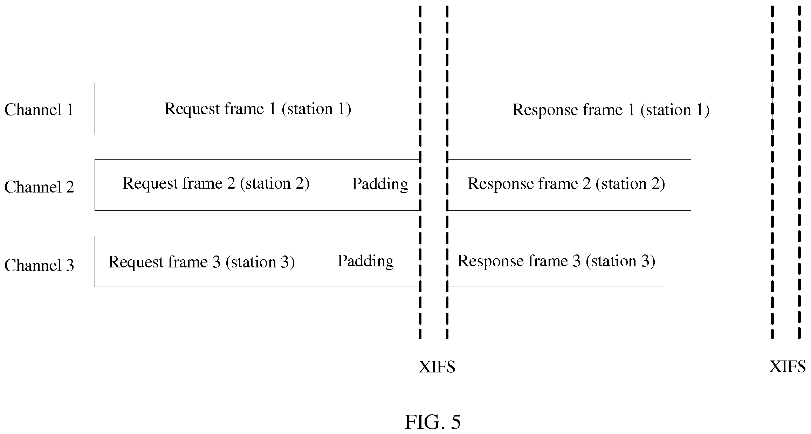

An example in which an AP serves as the network device and a station serves as the user equipment is used for description. FIG 5 is an information exchange diagram between an AP and a station on each channel according to Embodiment 2 of this application. As shown in FIG 5, the AP may send a request frame 1 to a station 1 on a channel 1 within the ATI, send a request frame 2 to a station 2 on a channel 2 within the ATI, and send a request frame 3 to a station 3 on a channel 3 within the ATI. The request frame 2 and the request frame 3 include padding information. The request frame 1, the request frame 2, and the request frame 3 have a same length. The station 1 may return a response frame 1 to the AP on the channel 1 after receiving an XIFS of the request frame 1; the station 2 may return a response frame 2 to the AP on the channel 2 after receiving an XIFS of the request frame 2; and the station 3 may return a response frame 3 to the AP on the channel 3 after receiving an XIFS of the request frame 3. The response frame 1 has a longest length. The AP has received the response frame 2 and the response frame 3 when the AP receives the response frame 1. Therefore, the AP may start next-round information exchange after receiving an XIFS of the response frame 1.

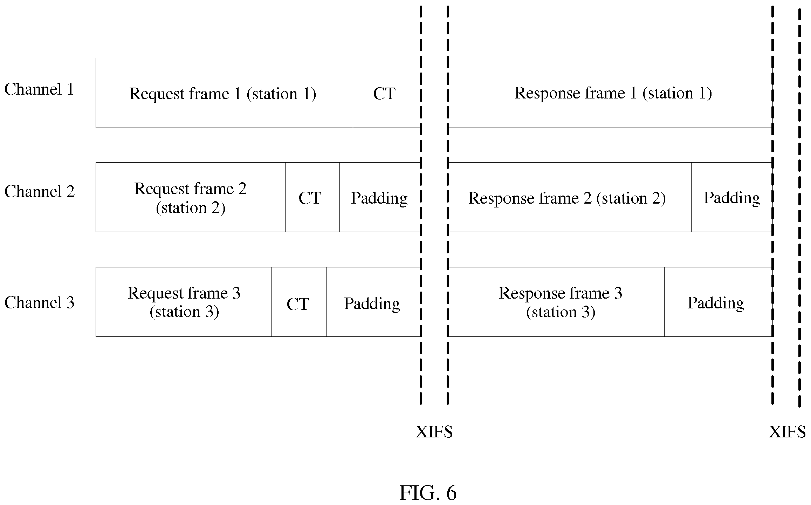

The following uses another instance in which an AP serves as the network device and a station serves as the user equipment for description. FIG 6 is another information exchange diagram between an AP and a station on each channel according to Embodiment 2 of this application. As shown in FIG 6, the AP may send a request frame 1 to a station 1 on a channel 1 within the ATI, send a request frame 2 to a station 2 on a channel 2 within the ATI, and send a request frame 3 to a station 3 on a channel 3 within the ATI. All CT fields in the request frame 1, the request frame 2, and the request frame 3 may carry frame length indication information. The request frame 2 and the request frame 3 further include padding information. The frame length indication information included in the request frame 1, the request frame 2, and the request frame 3 corresponds to a same frame length. The request frame 1, the request frame 2, and the request frame 3 have a same length.

The station 1 may determine, after receiving an XIFS of the request frame 1, that a length of a to-be-sent response frame is equal to the frame length corresponding to the frame length indication information, and return a response frame 1 to the AP on the channel 1.

The station 2 may determine, after receiving an XIFS of the request frame 2, that a length of a to-be-sent response frame is less than the frame length corresponding to the frame length indication information; add padding information to the to-be-sent response frame to obtain a response frame 2; and return the response frame 2 to the AP on the channel 2. A length of the response frame 2 is the frame length corresponding to the frame length indication information.

The station 3 may determine, after receiving an XIFS of the request frame 3, that a length of a to-be-sent response frame is less than the frame length corresponding to the frame length indication information; add padding information to the to-be-sent response frame to obtain a response frame 3; and return the response frame 3 to the AP on the channel 3. A length of the response frame 3 is the frame length corresponding to the frame length indication information.

Optionally, the request frame includes a preset start time.

Specifically, the preset start time may be located in at least one bit in a newly added response start time element (Response Start Time Element) or another information element in the request frame. Different user equipments correspond to a same preset start time.

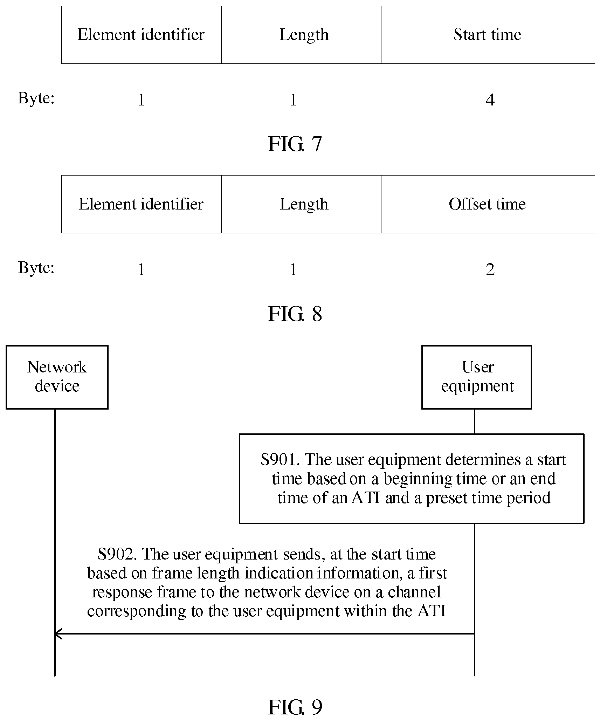

The following describes the response start time element. FIG 7 is a schematic structural diagram of a response start time element according to Embodiment 2 of this application. As shown in FIG 7, the response start time element may include a 1-byte element identifier field, a 1-byte length field, and a 4-byte start time field. The preset start time may be located in the start time field in the response start time element shown in FIG 7. It should be noted that the response start time element shown in FIG 7 is only an optional instance. In actual application, the response start time element may further include another field, and a length of the start time field is not limited to the foregoing 4 bytes, or may be another quantity of bytes.

S203 in which the user equipment sends, based on the frame length indication information, a first response frame to the network device on the channel corresponding to the user equipment within the ATI may include the following:

The user equipment sends, at the preset start time based on the frame length indication information, the first response frame to the network device on the channel corresponding to the user equipment within the ATI.

Specifically, the user equipment may determine the preset start time based on the request frame; and when the preset start time arrives, send, based on the frame length indication information, the first response frame to the network device on the channel corresponding to the user equipment within the ATI.

In the foregoing information transmission method, the request frame received by the user equipment includes the preset start time, and the user equipment sends, at the preset start time based on the frame length indication information, the first response frame to the network device on the channel corresponding to the user equipment within the ATI. Therefore, the network device may simultaneously receive response frames returned by all user equipments, thereby effectively avoiding interference caused because the network device sends information on one channel and receives information on another channel; in other words, avoiding asynchronization between receiving and sending.

Optionally, the request frame may include a preset time period.

The request frame may not include the start time. For example, the request frame includes the preset time period, so that the user equipment can determine, based on the preset time period, the start time for sending the response frame. The preset time period may be a time period between a beginning time at which the user equipment sends the response frame and a beginning time of the ATI, or may be a time period between a beginning time at which the user equipment sends the response frame and an end time of the ATI. Different user equipments correspond to a same preset time period.

The preset time period may be located in at least one bit in the request frame.

In an implementation, the preset time period may be located in at least one bit in a reserved field in the request frame.

In another implementation, the preset time period may be alternatively located in at least one bit in a newly added offset time element (offset Time Element) or another information element in the request frame.

The following describes the offset time element. FIG 8 is a schematic structural diagram of a response offset time element according to Embodiment 2 of this application. As shown in FIG 8, the response offset time element may include a 1-byte element identifier field, a 1-byte length field, and a 2-byte offset time field. The preset time period may be located in the offset time field in the response offset time element shown in FIG 8. It should be noted that the response offset time element shown in FIG 8 is only an optional instance. In actual application, the response offset time element may further include another field, and a length of the offset time field is not limited to the foregoing 2 bytes, or may be another quantity of bytes.

FIG 9 is a flowchart of another information transmission method according to Embodiment 2 of this application. As shown in FIG 9, S203 in which the user equipment sends, based on the frame length indication information, a first response frame to the network device on the channel corresponding to the user equipment within the ATI may include the following steps.

S901. The user equipment determines a start time based on a beginning time or an end time of the ATI and the preset time period.

Specifically, if the preset time period is a time period between a beginning time at which the user equipment sends the response frame and the beginning time of the ATI, the user equipment may determine the start time based on the beginning time of the ATI and the preset time period; or if the preset time period is a time period between a beginning time at which the user equipment sends the response frame and the end time of the ATI, the user equipment may determine the start time based on the end time of the ATI and the preset time period.

S902. The user equipment sends, at the start time based on the frame length indication information, the first response frame to the network device on the channel corresponding to the user equipment within the ATI.

In the foregoing information transmission method, the request frame received by the user equipment includes the preset time period, and the user equipment determines the start time based on the beginning time or the end time of the ATI and the preset time period, and sends a response frame to the network device at the start time on the channel corresponding to the user equipment within the ATI. Therefore, the network device may simultaneously receive response frames returned by all user equipments, thereby effectively avoiding interference caused because the network device sends information on one channel and receives information on another channel; in other words, avoiding asynchronization between receiving and sending.

Optionally, the request frame may further include duration indication information.

Optionally, the duration indication information may be located in at least one bit in a reserved field in the request frame, such as a reserved bit, or located in at least one bit in a preset information element in the request frame, such as a newly added information element.

Optionally, the method may further include the following:

The user equipment configures, based on the duration indication information, a value of a duration field in a to-be-sent second response frame as a value corresponding to the duration indication information, to obtain the first response frame.

Request frames received by different user equipments may include same duration indication information. Therefore, duration fields in response frames sent by the different user equipments to the network device on respectively corresponding channels may have a same value, so that the response frames sent by the different user equipments to the network device on the respectively corresponding channels may have a same length.

Optionally, the request frame may further include at least one of the following parameters: an antenna identifier (antenna ID) corresponding to the request frame, a sector identifier (sector ID) corresponding to the request frame, a beam identifier (beam ID) corresponding to the request frame, an antenna identifier corresponding to a to-be-returned response frame, a sector identifier corresponding to the to-be-returned response frame, and a beam identifier corresponding to the to-be-returned response frame.

Correspondingly, if the request frame includes the antenna identifier corresponding to the request frame, the user equipment may determine, based on the antenna identifier corresponding to the request frame, an antenna used by the network device to send the request frame.

If the request frame includes the sector identifier corresponding to the request frame, the user equipment may determine, based on the sector identifier corresponding to the request frame, a sector used by the network device to send the request frame.

If the request frame includes the beam identifier corresponding to the request frame, the user equipment may determine, based on the beam identifier corresponding to the request frame, a beam used by the network device to send the request frame.

If the request frame includes the antenna identifier corresponding to the to-be-returned response frame, the user equipment may determine a transmit antenna of the first response frame based on the antenna identifier corresponding to the to-be-returned response frame, and send, by using the transmit antenna, the first response frame to the network device on the channel corresponding to the user equipment within the ATI.

If the request frame includes the sector identifier corresponding to the to-be-returned response frame, the user equipment may determine a transmit sector of the first response frame based on the sector identifier corresponding to the to-be-returned response frame, and send, by using the transmit sector, the first response frame to the network device on the channel corresponding to the user equipment within the ATI.

If the request frame includes the beam identifier corresponding to the to-be-returned response frame, the user equipment may determine a transmit beam of the first response frame based on the beam identifier corresponding to the to-be-returned response frame, and send, by using the transmit beam, the first response frame to the network device on the channel corresponding to the user equipment within the ATI.

Optionally, the first response frame may further include at least one of the following parameters: an antenna identifier corresponding to the first response frame, a sector identifier corresponding to the first response frame, and a beam identifier corresponding to the first response frame.

Correspondingly, if the first response frame includes the antenna identifier corresponding to the first response frame, the network device may determine, based on the antenna identifier corresponding to the first response frame, an antenna used by the user equipment to send the first response frame.

If the first response frame includes the sector identifier corresponding to the first response frame, the network device may determine, based on the sector identifier corresponding to the first response frame, a sector used by the user equipment to send the first response frame.

If the first response frame includes the beam identifier corresponding to the first response frame, the network device may determine, based on the beam identifier corresponding to the first response frame, a beam used by the user equipment to send the first response frame.

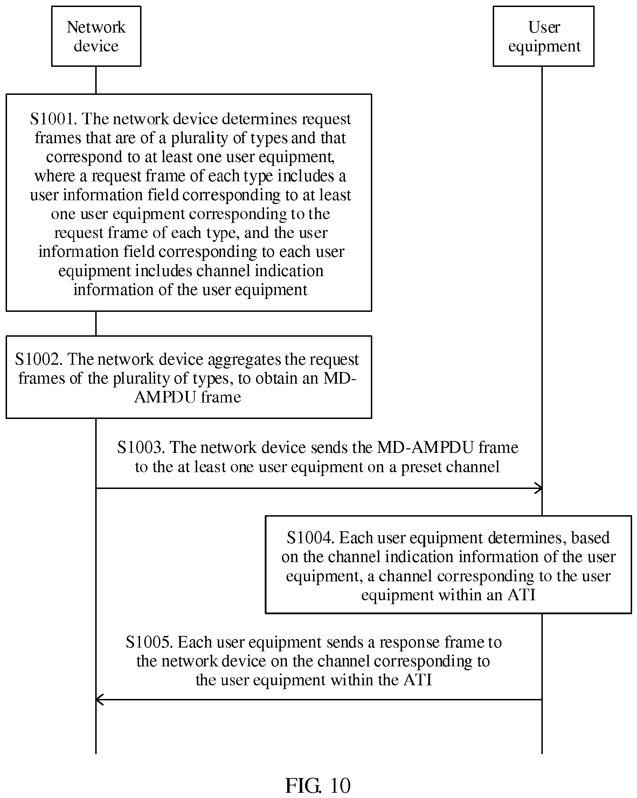

Request frames corresponding to at least one user equipment may have a same type, or may have different types. In other words, the request frames corresponding to the at least one user equipment may have a plurality of types. To improve communication efficiency of a network system when the request frames corresponding to the at least one user equipment have a plurality of types, Embodiment 3 of this application further provides an information transmission method. FIG 10 is a flowchart of the information transmission method according to Embodiment 3 of this application. As shown in FIG 10, the information transmission method may include the following steps.

S1001. A network device determines request frames that have a plurality of types and that correspond to at least one user equipment, where a request frame of each type includes a user information field corresponding to at least one user equipment corresponding to the request frame of each type, and the user information field corresponding to each user equipment includes channel indication information of the user equipment.

The network device may obtain, based on the request frame of one type corresponding to the at least one user equipment, a request frame of another type corresponding to the at least one user equipment, and then obtain the request frames of the plurality of types.

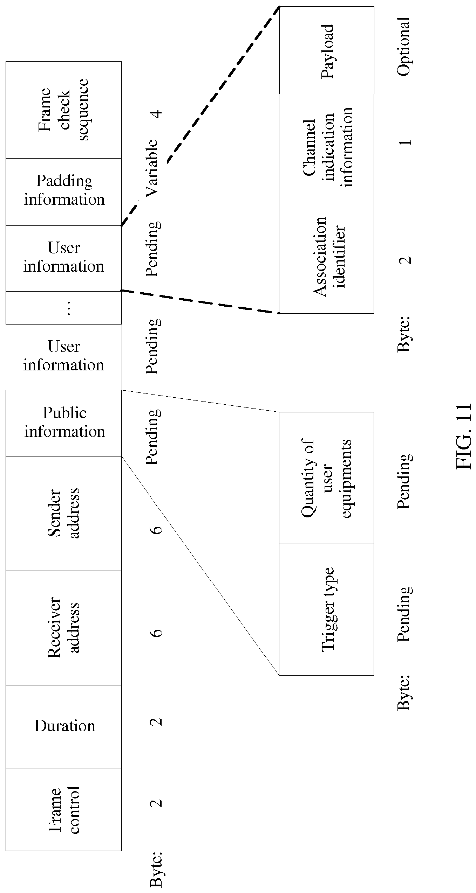

The following uses an instance for description. FIG 11 is a schematic structural diagram of a request frame of one type according to Embodiment 3 of this application. As shown in FIG 11, a MAC header of the request frame may include a 2-byte frame control field, a 2-byte duration field, a 6-byte RA field, a 6-byte TA field, a public information field including a to-be-determined quantity of bytes, a user information field including a to-be-determined quantity of bytes, a padding information field including an optional quantity of bytes, and a 4-byte FCS field. Each user information field may include, for example, a 2-byte association identifier (associated Identity, AID) field, a 1-byte channel indication information field, and a payload (payload) field including an optional quantity of bytes. The payload field in each user information field may be used to indicate request content corresponding to each user equipment.

If there is one user equipment, a value of the RA field in FIG 11 indicates a MAC address of the user equipment. If there are a plurality of user equipments, a value of the RA field in the request frame is a value corresponding to broadcast (broadcast) address.

The public information field may include, for example, a trigger type field including a to-be-determined quantity of bytes and a user equipment quantity field including a to-be-determined quantity of bytes. The trigger type field may be used to indicate a trigger type of the request frame of one type. The user equipment quantity field may be used to indicate a quantity of user equipments corresponding to the request frame of one type. Different values of the trigger type field may correspond to different trigger types. In a specific instance, for a correspondence between a value of the trigger type field and a trigger type, refer to Table 1.

**Table 1**

| Value of a trigger type field | Trigger type |
|---|---|
| 0 | Grant type |
| 1 | Poll type |
| 2 | RTS type |
| 3 | ACK type |
| ... | Other types |

With reference to Table 1, if the value of the trigger type field is 0, the trigger type field may indicate that the trigger type of the request frame is the grant type. In other words, the request frame is a grant frame. If the value of the trigger type field is 1, the trigger type field may indicate that the trigger type of the request frame is the poll type. In other words, the request frame is a poll frame. If the value of the trigger type field is 2, the trigger type field may indicate that the trigger type of the request frame is the RTS type. In other words, the request frame is an RTS frame. If the value of the trigger type field is 3, the trigger type field may indicate that the trigger type of the request frame is the ACK type. In other words, the request frame is an ACK frame. If the value of the trigger type field is another value, the trigger type field may indicate that the request frame belongs to another trigger type.

Certainly, there may be another correspondence between a value of the trigger type field and a trigger type. Table 1 is merely an example, and this application imposes no limitation.

S1002. The network device aggregates the request frames of the plurality of types, to obtain a multi-destination aggregation medium access control protocol data unit (Multi-Destination-Aggregation Medium access control Protocol Data Unit, MD-AMPDU) frame.

S1003. The network device sends the MD-AMPDU frame to the at least one user equipment on a preset channel.

The network device may allocate, to each of the at least one user equipment, a channel that is from a plurality of channels and that corresponds to each user equipment within an ATI, and send the MD-AMPDU frame to the at least one user equipment. Different user equipments correspond to different channels at a same moment within the ATI. The preset channel may be any one of the plurality of channels, such as a primary channel. The plurality of channels may include, for example, four channels corresponding to the 802.11ad standard, or may include six channels corresponding to the 802.11ay standard. Each channel may be a channel of 2.16 GHz.

The MD-AMPDU frame may be the request frame corresponding to the at least one user equipment.

S1004. Each user equipment determines, based on channel indication information of the user equipment, a channel corresponding to the user equipment within the ATI.

Each user equipment may determine that a channel indicated by the channel indication information of the user equipment is the channel corresponding to the user equipment within the ATI. The channel corresponding to each user equipment within the ATI may be the same as or different from the preset channel in the plurality of channels.

S1005. Each user equipment sends a response frame to the network device on the channel corresponding to the user equipment within the ATI.

According to the information transmission method, communication efficiency of a network system can be improved when request frames corresponding to the at least one user equipment have a plurality of types.

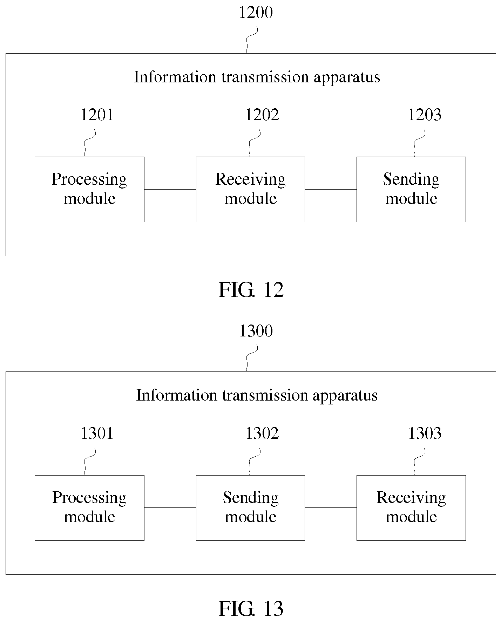

Embodiment 4 of this application further provides an information transmission apparatus. FIG 12 is a schematic structural diagram of the information transmission apparatus 1200 according to Embodiment 4 of this application. As shown in FIG 12, the information transmission apparatus 1200 may include:
a processing module 1201, configured to determine a channel corresponding to user equipment within an ATI;
a receiving module 1202, configured to receive, on the channel corresponding to the user equipment within the ATI, a request frame sent by a network device, where the request frame includes frame length indication information; and
a sending module 1203, configured to send, based on the frame length indication information, a first response frame to the network device on the channel corresponding to the user equipment within the ATI, where a length of the first response frame is a frame length corresponding to the frame length indication information.

The processing module 1201 is further configured to: compare a length of a to-be-sent second response frame with the frame length corresponding to the frame length indication information; and if the length of the second response frame is less than the frame length corresponding to the frame length indication information, add padding information to the second response frame to obtain the first response frame, so that the length of the first response frame is the frame length corresponding to the frame length indication information.

Optionally, the processing module 1201 is further configured to: if the length of the second response frame is greater than the frame length corresponding to the frame length indication information, compress or truncate the second response frame to obtain the first response frame, so that the length of the first response frame is the frame length corresponding to the frame length indication information.

Optionally, the frame length indication information is located in a reserved field or a preset information element in the request frame.

Optionally, the request frame is any one of a management frame, a grant frame, a poll frame, an ACK frame, and an RTS frame; and
the first response frame is any one of an SPR frame, a CTS frame, and an ACK frame.

The information transmission apparatus provided in Embodiment 4 of this application may perform the information transmission method performed by the user equipment in FIG 2 or FIG 3. For a specific implementation process and beneficial effects, refer to the foregoing descriptions, and details are not described herein again.

Embodiment 5 of this application further provides an information transmission apparatus. FIG 13 is a schematic structural diagram of the information transmission apparatus 1300 according to Embodiment 5 of this application. As shown in FIG 13, the information transmission apparatus 1300 includes:
a processing module 1301, configured to determine a channel corresponding to user equipment within an ATI;
a sending module 1302, configured to send a request frame to the user equipment on the channel corresponding to the user equipment within the ATI, where the request frame includes frame length indication information; and
a receiving module 1303, configured to receive, on the channel corresponding to the user equipment within the ATI, a first response frame sent by the user equipment based on the frame length indication information, where a length of the first response frame is a frame length corresponding to the frame length indication information.

The first response frame is a response frame obtained by the user equipment by adding padding information to a to-be-sent second response frame when a length of the second response frame is less than the frame length corresponding to the frame length indication information.

In another example, the first response frame is a response frame obtained by the user equipment by compressing or truncating a to-be-sent second response frame when a length of the second response frame is greater than the frame length corresponding to the frame length indication information.

Optionally, the frame length indication information is located in a reserved field or a preset information element in the request frame.

Optionally, the request frame is any one of a management frame, a grant frame, a poll frame, an ACK frame, and an RTS frame; and
the response frame is any one of an SPR frame, a CTS frame, and an ACK frame.

The information transmission apparatus provided in Embodiment 5 of this application may perform the information transmission method performed by the network device in FIG 2 or FIG 3. For a specific implementation process and beneficial effects, refer to the foregoing descriptions, and details are not described herein again.

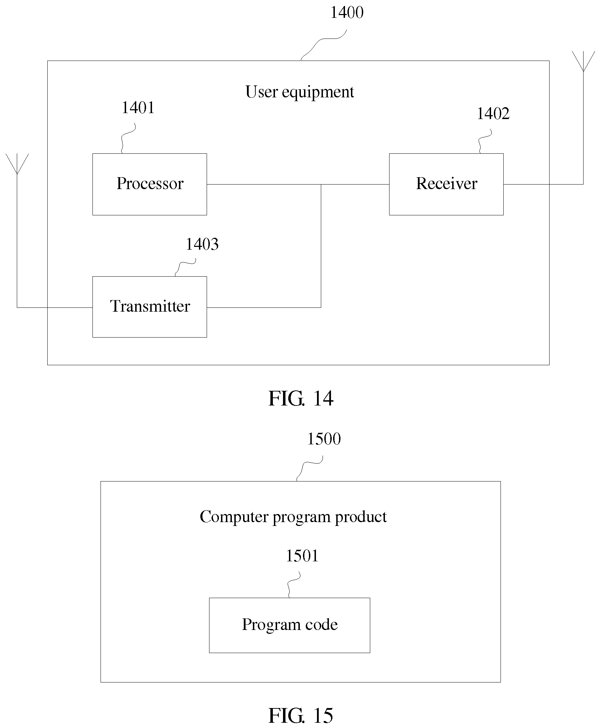

Embodiment 6 of this application further provides user equipment. FIG 14 is a schematic structural diagram of the user equipment 1400 according to Embodiment 6 of this application. As shown in FIG 14, the user equipment 1400 may include a processor 1401, a receiver 1402, and a transmitter 1403. The processor 1401 is connected to the receiver 1402, and the processor 1401 is further connected to the transmitter 1403.

The processor 1401 is configured to determine a channel corresponding to the user equipment 1400 within the ATI.

The receiver 1402 is configured to receive, on the channel corresponding to the user equipment within the ATI, a request frame sent by a network device, where the request frame includes frame length indication information.

The transmitter 1403 is configured to send, based on the frame length indication information, a first response frame to the network device on the channel corresponding to the user equipment within the ATI, where a length of the first response frame is a frame length corresponding to the frame length indication information.

The processor 1401 is further configured to: before the transmitter 1403 sends, based on the frame length indication information, the first response frame to the network device on the channel corresponding to the user equipment within the ATI, compare a length of a to-be-sent second response frame with the frame length corresponding to the frame length indication information; and if the length of the second response frame is less than the frame length corresponding to the frame length indication information, add padding information to the second response frame to obtain the first response frame, so that the length of the first response frame is the frame length corresponding to the frame length indication information.

Optionally, the processor 1401 is further configured to: if the length of the second response frame is greater than the frame length corresponding to the frame length indication information, compress or truncate the second response frame to obtain the first response frame, so that the length of the first response frame is the frame length corresponding to the frame length indication information.

Optionally, the frame length indication information is located in a reserved field or a preset information element in the request frame.

Optionally, the request frame is any one of a management frame, a grant frame, a poll frame, an ACK frame, and an RTS frame.

Optionally, the first response frame is any one of an SPR frame, a CTS frame, and an ACK frame.

Optionally, an embodiment of this application further provides a computer program product. FIG 15 is a schematic structural diagram of a computer program product according to Embodiment 6 of this application. As shown in FIG 15, a computer program product 1500 may include program code 1501.

The program code 1501 may be corresponding program code used to perform the information transmission method performed by the user equipment in FIG 2 or FIG 3 in the embodiments of this application.

The program code 1501 in the computer program product 1500 may be executed, for example, by the processor 1401 in the user equipment 1400 shown in FIG 14.

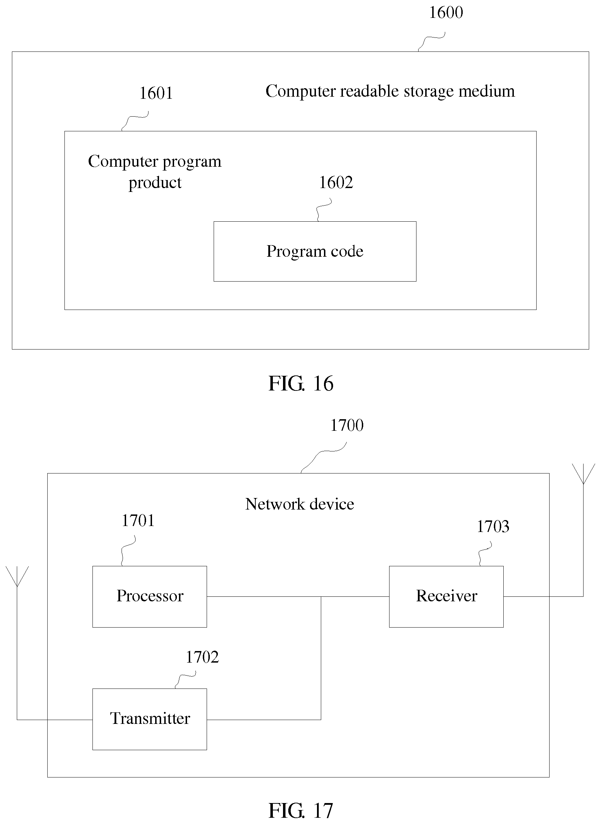

Optionally, an embodiment of this application further provides a computer readable storage medium. FIG 16 is a schematic structural diagram of a computer readable storage medium according to Embodiment 6 of this application. As shown in FIG 16, a computer readable storage medium 1600 may be configured to store a computer program product 1601. The computer program product 1601 may include program code 1602.

The program code 1602 may be corresponding program code used to perform the information transmission method performed by the user equipment in FIG 2 or FIG 3 in the embodiments of this application.

The computer readable storage medium 1600 may be an internal memory in the user equipment 1400 shown in FIG 14, or may be an external memory connected to the user equipment 1400 shown in FIG 14. The program code 1602 in the computer program product 1601 may be executed, for example, by the processor 1401 in the user equipment 1400 shown in FIG 14.

The user equipment 1400, the computer program product 1500, and the storage medium 1600 provided in Embodiment 6 of this application all can perform the information transmission method performed by the user equipment in FIG 2 or FIG 3. For a specific implementation process and beneficial effects, refer to the foregoing descriptions, and details are not described herein again.

Embodiment 7 of this application further provides a network device. FIG 17 is a schematic structural diagram of the network device according to Embodiment 7 of this application. As shown in FIG 17, a network device 1700 includes a processor 1701, a transmitter 1702, and a receiver 1703. The processor 1701 is connected to the transmitter 1702, and the processor 1701 is further connected to the receiver 1703.

The processor 1701 is configured to determine a channel corresponding to user equipment within an ATI.

The transmitter 1702 is configured to send a request frame to the user equipment on the channel corresponding to the user equipment within the ATI, where the request frame includes frame length indication information.

The receiver 1703 is configured to receive, on the channel corresponding to the user equipment within the ATI, a first response frame sent by the user equipment based on the frame length indication information, where a length of the first response frame is a frame length corresponding to the frame length indication information.

The first response frame is a response frame obtained by the user equipment by adding padding information to a to-be-sent second response frame when a length of the second response frame is less than the frame length corresponding to the frame length indication information.

Optionally, the first response frame is a response frame obtained by the user equipment by compressing or truncating a to-be-sent second response frame when a length of the second response frame is greater than the frame length corresponding to the frame length indication information.

Optionally, the frame length indication information is located in a reserved field or a preset information element in the request frame.

Optionally, the request frame is any one of a management frame, a grant frame, a poll frame, an ACK frame, and an RTS frame; and
the response frame is any one of an SPR frame, a CTS frame, and an ACK frame.

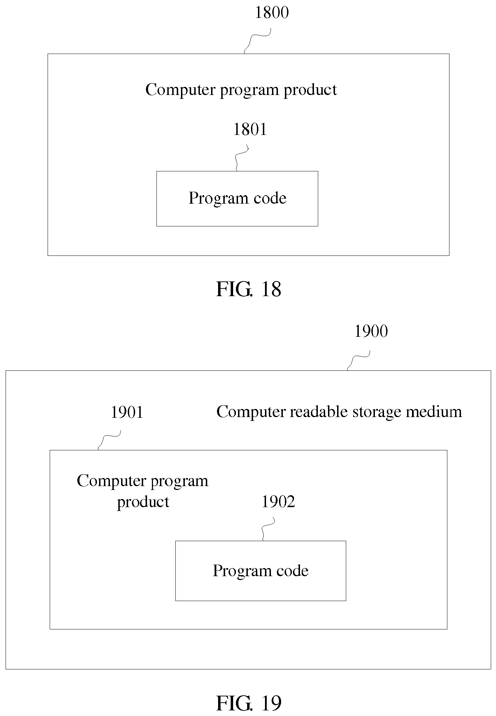

Optionally, an embodiment of this application further provides a computer program product. FIG 18 is a schematic structural diagram of a computer program product according to Embodiment 7 of this application. As shown in FIG 18, a computer program product 1800 may include program code 1801.

The program code 1801 may be corresponding program code used to perform the information transmission method performed by the network device in FIG 2 or FIG 3 in the embodiments of this application.

The program code 1801 in the computer program product 1800 may be executed, for example, by the processor 1701 in the network device 1700 shown in FIG 17.

Optionally, an embodiment of this application further provides a computer readable storage medium. FIG 19 is a schematic structural diagram of a computer readable storage medium according to Embodiment 7 of this application. As shown in FIG 19, a computer readable storage medium 1900 may be configured to store a computer program product 1901. The computer program product 1901 may include program code 1902.

The program code 1902 may be corresponding program code used to perform the information transmission method performed by the network device in FIG 2 or FIG 3 in the embodiments of this application.

The computer readable storage medium 1900 may be an internal memory in the network device 1700 shown in FIG 17, or may be an external memory connected to the network device 1700 shown in FIG 17. The program code 1902 in the computer program product 1901 may be executed, for example, by the processor 1701 in the network device 1700 shown in FIG 17.

The network device 1700, the computer program product 1800, and the storage medium 1900 provided in Embodiment 7 of this application all can perform the information transmission method performed by the network device in FIG 2 or FIG 3. For a specific implementation process and beneficial effects, refer to the foregoing descriptions, and details are not described herein again.

It should be noted that all or some of the foregoing embodiments may be implemented through software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer readable storage medium, or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

## Claims

1. An information transmission method, comprising:
determining (S202a), by a user equipment, a channel corresponding to the user equipment within an IEEE 802.11 announcement transmission interval, ATI;
receiving (S202), by the user equipment on the channel corresponding to the user equipment within the ATI, a request frame sent by a network device, wherein the request frame comprises frame length indication information; and
sending (S203), by the user equipment based on the frame length indication information, a first response frame to the network device on the channel corresponding to the user equipment within the ATI, wherein a length of the first response frame is a frame length corresponding to the frame length indication information;
**characterized in that**
before the sending (S203), by the user equipment based on the frame length indication information, a first response frame to the network device on the channel corresponding to the user equipment within the ATI, the method further comprises:
comparing (S301), by the user equipment, a length of a to-be-sent second response frame with the frame length corresponding to the frame length indication information; and
if the length of the second response frame is less than the frame length corresponding to the frame length indication information, adding (S302), by the user equipment, padding information to the second response frame to obtain the first response frame, so that the length of the first response frame is the frame length corresponding to the frame length indication information.

2. The method according to claim 1, wherein the method further comprises:
if the length of the second response frame is greater than the frame length corresponding to the frame length indication information, compressing or truncating (S303), by the user equipment, the second response frame to obtain the first response frame, so that the length of the first response frame is the frame length corresponding to the frame length indication information.

3. The method according to any one of claims 1 or 2, wherein the frame length indication information is located in a reserved field or a preset information element in the request frame.

4. The method according to any one of claims 1 or 2, wherein the request frame is any one of a management frame, a grant frame, a poll frame, an acknowledge, ACK, frame, and a request to send, RTS, frame; and
the first response frame is any one of a service period request, SPR, frame, a clear to send, CTS, frame, and an ACK frame.

5. User equipment (1400), comprising a processor (1401), a receiver (1402), and a transmitter (1403), wherein the processor is connected to the receiver, and the processor is further connected to the transmitter;
the processor (1401) is configured to determine (S202a) a channel corresponding to the user equipment within an IEEE 802.11 announcement transmission interval, ATI;
the receiver (1402) is configured to receive (S202), on the channel corresponding to the user equipment within the ATI, a request frame sent by a network device, wherein the request frame comprises frame length indication information; and
the transmitter (1403) is configured to send (S203), based on the frame length indication information, a first response frame to the network device on the channel corresponding to the user equipment within the ATI, wherein a length of the first response frame is a frame length corresponding to the frame length indication information;
**characterized in that**
the processor (1401) is further configured to: before the transmitter sends (S203), based on the frame length indication information, the first response frame to the network device on the channel corresponding to the user equipment within the ATI, compare (S301) a length of a to-be-sent second response frame with the frame length corresponding to the frame length indication information; and if the length of the second response frame is less than the frame length corresponding to the frame length indication information, add (S302) padding information to the second response frame to obtain the first response frame, so that the length of the first response frame is the frame length corresponding to the frame length indication information.

6. The user equipment (1400) according to claim 5, wherein
the processor (1401) is further configured to: if the length of the second response frame is greater than the frame length corresponding to the frame length indication information, compress or truncate (S303) the second response frame to obtain the first response frame, so that the length of the first response frame is the frame length corresponding to the frame length indication information.

7. The user equipment (1400) according to any one of claims 5 or 6, wherein the frame length indication information is located in a reserved field or a preset information element in the request frame.

8. The user equipment (1400) according to any one of claims 5 or 6, wherein the request frame is any one of a management frame, a grant frame, a poll frame, an acknowledge, ACK, frame, and a request to send, RTS, frame; and
the first response frame is any one of a service period request, SPR, frame, a clear to send, CTS, frame, and an ACK frame.

9. A network device (1700), comprising a processor (1701), a transmitter (1702), and a receiver (1703), wherein the processor is connected to the transmitter, and the processor is further connected to the receiver;
the processor (1701) is configured to determine (S201) a channel corresponding to a user equipment within an IEEE 802.11 announcement transmission interval, ATI;
the transmitter (1702) is configured to send (S202) a request frame to the user equipment on the channel corresponding to the user equipment within the ATI, wherein the request frame comprises frame length indication information; and
the receiver (1703) is configured to receive (S203), on the channel corresponding to the user equipment within the ATI, a first response frame sent by the user equipment based on the frame length indication information, wherein a length of the first response frame is a frame length corresponding to the frame length indication information;
**characterized in that**
the first response frame is a response frame obtained by the user equipment by adding (S302) padding information to a to-be-sent second response frame when a length of the second response frame is less than the frame length corresponding to the frame length indication information.

10. The network device (1700) according to claim 9, wherein the frame length indication information is located in a reserved field or a preset information element in the request frame.

11. The network device (1700) according to any one of claims 9 or 10, wherein the request frame is any one of a management frame, a grant frame, a poll frame, an acknowledge, ACK, frame, and a request to send, RTS, frame; and
the response frame is any one of a service period request, SPR, frame, a clear to send, CTS, frame, and an ACK frame.

## Patentansprüche

1. Informationsübertragungsverfahren, umfassend:
Ermitteln (S202a), durch eine Benutzerausrüstung, eines der Benutzerausrüstung entsprechenden Kanals innerhalb eines IEEE-802.11-konformen "Announcement Transmission Interval" (ATI);
Empfangen (S202), durch die Benutzerausrüstung, auf dem der Benutzerausrüstung entsprechenden Kanal innerhalb des ATI, eines von einer Netzwerkeinrichtung gesendeten Anforderungsrahmens, wobei der Anforderungsrahmen Rahmenlänge-Angabeinformationen umfasst; und
Senden (S203), durch die Benutzerausrüstung, eines ersten Antwortrahmens an die Netzwerkeinrichtung auf dem der Benutzerausrüstung entsprechenden Kanal innerhalb des ATI, basierend auf den Rahmenlänge-Angabeinformationen, wobei eine Länge des ersten Antwortrahmens eine den Rahmenlänge-Angabeinformationen entsprechende Rahmenlänge ist;
**dadurch gekennzeichnet, dass**
das Verfahren vor dem Senden (S203), durch die Benutzerausrüstung, eines ersten Antwortrahmens an die Netzwerkeinrichtung auf dem der Benutzerausrüstung entsprechenden Kanal innerhalb des ATI, basierend auf den Rahmenlänge-Angabeinformationen, ferner umfasst:
Vergleichen (S301), durch die Benutzerausrüstung, einer Länge eines zu sendenden zweiten Antwortrahmens mit der den Rahmenlänge-Angabeinformationen entsprechenden Rahmenlänge; und
falls die Länge des zweiten Antwortrahmens geringer ist als die den Rahmenlänge-Angabeinformationen entsprechende Rahmenlänge, Hinzufügen (S302), durch die Benutzerausrüstung, von Padding-Informationen zu dem zweiten Antwortrahmen, um den ersten Antwortrahmen zu erhalten, sodass die Länge des ersten Antwortrahmens die den Rahmenlänge-Angabeinformationen entsprechende Rahmenlänge ist.

2. Verfahren nach Anspruch 1, wobei das Verfahren ferner umfasst:
falls die Länge des zweiten Antwortrahmens größer ist als die den Rahmenlänge-Angabeinformationen entsprechende Rahmenlänge, Komprimieren oder Trunkieren (S303), durch die Benutzerausrüstung, des zweiten Antwortrahmens, um den ersten Antwortrahmen zu erhalten, sodass die Länge des ersten Antwortrahmens die den Rahmenlänge-Angabeinformationen entsprechende Rahmenlänge ist.

3. Verfahren nach einem der Ansprüche 1 oder 2, wobei die Rahmenlänge-Angabeinformationen in einem reservierten Feld oder einem voreingestellten Informationselement in dem Anforderungsrahmen positioniert sind.

4. Verfahren nach einem der Ansprüche 1 oder 2, wobei der Anforderungsrahmen einer von einem Verwaltungsrahmen, einem Zuteilungsrahmen, einem Poll-Rahmen, einem Quittierungs(ACK)-Rahmen und einem Sendeanforderungs(RTS)-Rahmen ist; und der erste Antwortrahmen einer von einem Dienstzeitraumanforderungs(SPR)-Rahmen, einem Sendefreigabe(CTS)-Rahmen und einem ACK-Rahmen ist.

5. Benutzerausrüstung (1400), umfassend einen Prozessor (1401), einen Empfänger (1402) und einen Sender (1403), wobei der Prozessor mit dem Empfänger verbunden ist und der Prozessor ferner mit dem Sender verbunden ist;
der Prozessor (1401) ausgelegt ist zum Ermitteln (S202a) eines der Benutzerausrüstung entsprechenden Kanals innerhalb eines IEEE-802.11-konformen "Announcement Transmission Interval" (ATI);
der Empfänger (1402) ausgelegt ist zum Empfangen (S202), auf dem der Benutzerausrüstung entsprechenden Kanal innerhalb des ATI, eines von einer Netzwerkeinrichtung gesendeten Anforderungsrahmens, wobei der Anforderungsrahmen Rahmenlänge-Angabeinformationen umfasst; und
der Sender (1403) ausgelegt ist zum Senden (S203), basierend auf den Rahmenlänge-Angabeinformationen, eines ersten Antwortrahmens an die Netzwerkeinrichtung auf dem der Benutzerausrüstung entsprechenden Kanal innerhalb des ATI, wobei eine Länge des ersten Antwortrahmens eine den Rahmenlänge-Angabeinformationen entsprechende Rahmenlänge ist;
**dadurch gekennzeichnet, dass**
der Prozessor (1401) ferner dafür ausgelegt ist, basierend auf den Rahmenlänge-Angabeinformationen, vor dem Senden (S203) durch den Sender des ersten Antwortrahmens an die Netzwerkeinrichtung auf dem der Benutzerausrüstung entsprechenden Kanal innerhalb des ATI, eine Länge eines zu sendenden zweiten Antwortrahmens mit der den Rahmenlänge-Angabeinformationen entsprechenden Rahmenlänge zu vergleichen (S301); und falls die Länge des zweiten Antwortrahmens geringer ist als die den Rahmenlänge-Angabeinformationen entsprechende Rahmenlänge, Padding-Informationen zu dem zweiten Antwortrahmen hinzuzufügen (S302), um den ersten Antwortrahmen zu erhalten, sodass die Länge des ersten Antwortrahmens die den Rahmenlänge-Angabeinformationen entsprechende Rahmenlänge ist.

6. Benutzerausrüstung (1400) nach Anspruch 5, wobei
der Prozessor (1401) ferner dafür ausgelegt ist, falls die Länge des zweiten Antwortrahmens größer ist als die den Rahmenlänge-Angabeinformationen entsprechende Rahmenlänge, den zweiten Antwortrahmen zu komprimieren oder zu trunkieren (S303), um den ersten Antwortrahmen zu erhalten, sodass die Länge des ersten Antwortrahmens die den Rahmenlänge-Angabeinformationen entsprechende Rahmenlänge ist.

7. Benutzerausrüstung (1400) nach einem der Ansprüche 5 oder 6, wobei die Rahmenlänge-Angabeinformationen in einem reservierten Feld oder einem voreingestellten Informationselement in dem Anforderungsrahmen positioniert sind.

8. Benutzerausrüstung (1400) nach einem der Ansprüche 5 oder 6, wobei der Anforderungsrahmen einer von einem Verwaltungsrahmen, einem Zuteilungsrahmen, einem Poll-Rahmen, einem Quittierungs(ACK)-Rahmen und einem Sendeanforderungs(RTS)-Rahmen ist; und
der erste Antwortrahmen einer von einem Dienstzeitraumanforderungs(SPR)-Rahmen, einem Sendefreigabe(CTS)-Rahmen und einem ACK-Rahmen ist.

9. Netzwerkeinrichtung (1700), umfassend einen Prozessor (1701), einen Sender (1702) und einen Empfänger (1703), wobei der Prozessor mit dem Sender verbunden ist und der Prozessor ferner mit dem Empfänger verbunden ist;
der Prozessor (1701) ausgelegt ist zum Ermitteln (S201) eines einer Benutzerausrüstung entsprechenden Kanals innerhalb eines IEEE-802.11-konformen "Announcement Transmission Interval" (ATI);
der Sender (1702) ausgelegt ist zum Senden (S202) eines Anforderungsrahmens an die Benutzerausrüstung auf dem der Benutzerausrüstung entsprechenden Kanal innerhalb des ATI, wobei der Anforderungsrahmen Rahmenlänge-Angabeinformationen umfasst; und
der Empfänger (1703) ausgelegt ist zum Empfangen (S203), auf dem der Benutzerausrüstung entsprechenden Kanal innerhalb des ATI, eines ersten, von der Benutzerausrüstung basierend auf den Rahmenlänge-Angabeinformationen gesendeten, Antwortrahmens, wobei eine Länge des ersten Antwortrahmens eine den Rahmenlänge-Angabeinformationen entsprechende Rahmenlänge ist;
**dadurch gekennzeichnet, dass**
der erste Antwortrahmen ein Antwortrahmen ist, der von der Benutzerausrüstung erhalten wurde durch Hinzufügen (S302) von Padding-Informationen zu einem zu sendenden zweiten Antwortrahmen, wenn eine Länge des zweiten Antwortrahmens geringer ist als die den Rahmenlänge-Angabeinformationen entsprechende Rahmenlänge.

10. Netzwerkeinrichtung (1700) nach Anspruch 9, wobei die Rahmenlänge-Angabeinformationen in einem reservierten Feld oder einem voreingestellten Informationselement in dem Anforderungsrahmen positioniert sind.

11. Netzwerkeinrichtung (1700) nach einem der Ansprüche 9 oder 10, wobei der Anforderungsrahmen einer von einem Verwaltungsrahmen, einem Zuteilungsrahmen, einem Poll-Rahmen, einem Quittierungs(ACK)-Rahmen und einem Sendeanforderungs(RTS)-Rahmen ist; und
der Antwortrahmen einer von einem Dienstzeitraumanforderungs(SPR)-Rahmen, einem Sendefreigabe(CTS)-Rahmen und einem ACK-Rahmen ist.

## Revendications

1. Procédé de transmission d'informations, comprenant les étapes consistant à :
déterminer (S202a), par un équipement utilisateur, un canal correspondant à l'équipement utilisateur au sein d'un intervalle de transmission d'annonce, ATI, IEEE 802.11 ;
recevoir (S202), par l'équipement utilisateur sur le canal correspondant à l'équipement utilisateur au sein de l'ATI, une trame de demande envoyée par un dispositif de réseau, la trame de demande comprenant des informations d'indication de longueur de trame ; et
envoyer (S203), par l'équipement utilisateur d'après les informations d'indication de longueur de trame, une première trame de réponse au dispositif de réseau sur le canal correspondant à l'équipement utilisateur au sein de l'ATI, une longueur de la première trame de réponse étant une longueur de trame correspondant aux informations d'indication de longueur de trame ;
**caractérisé en ce que**
avant l'envoi (S203), par l'équipement utilisateur d'après les informations d'indication de longueur de trame, d'une première trame de réponse au dispositif de réseau sur le canal correspondant à l'équipement utilisateur au sein de l'ATI, le procédé comprend également les étapes consistant à :
comparer (S301), par l'équipement utilisateur, une longueur d'une deuxième trame de réponse à envoyer à la longueur de trame correspondant aux informations d'indication de longueur de trame ; et
si la longueur de la deuxième trame de réponse est inférieure à la longueur de trame correspondant aux informations d'indication de longueur de trame, ajouter (S302), par l'équipement utilisateur, des informations de remplissage à la deuxième trame de réponse pour obtenir la première trame de réponse, afin que la longueur de la première trame de réponse soit la longueur de trame correspondant aux informations d'indication de longueur de trame.

2. Procédé selon la revendication 1, le procédé comprenant également l'étape consistant à :
si la longueur de la deuxième trame de réponse est supérieure à la longueur de trame correspondant aux informations d'indication de longueur de trame, compresser ou tronquer (S303), par l'équipement utilisateur, la deuxième trame de réponse pour obtenir la première trame de réponse, afin que la longueur de la première trame de réponse soit la longueur de trame correspondant aux informations d'indication de longueur de trame.

3. Procédé selon l'une quelconque des revendications 1 et 2, dans lequel les informations d'indication de longueur de trame sont situées dans un champ réservé ou un élément d'information prédéfini dans la trame de demande.

4. Procédé selon l'une quelconque des revendications 1 et 2, dans lequel la trame de demande est n'importe quelle trame parmi une trame de gestion, une trame d'autorisation, une trame de sondage, une trame d'acquittement, ACK, et une trame de demande d'envoi, RTS ; et
la première trame de réponse est n'importe quelle trame parmi une trame de demande de période de service, SPR, une trame Prêt à émettre, CTS, et une trame ACK.

5. Équipement utilisateur (1400), comprenant un processeur (1401), un récepteur (1402) et un transmetteur (1403), le processeur étant connecté au récepteur, et le processeur étant également connecté au transmetteur ;
le processeur (1401) étant configuré pour déterminer (S202a) un canal correspondant à l'équipement utilisateur au sein d'un intervalle de transmission d'annonce, ATI, IEEE 802.11 ;
le récepteur (1402) étant configuré pour recevoir (S202), sur le canal correspondant à l'équipement utilisateur au sein de l'ATI, une trame de demande envoyée par un dispositif de réseau, la trame de demande comprenant des informations d'indication de longueur de trame ; et
le transmetteur (1403) étant configuré pour envoyer (S203), d'après les informations d'indication de longueur de trame, une première trame de réponse au dispositif de réseau sur le canal correspondant à l'équipement utilisateur au sein de l'ATI, une longueur de la première trame de réponse étant une longueur de trame correspondant aux informations d'indication de longueur de trame ;
**caractérisé en ce que**
le processeur (1401) est également configuré pour : avant que le transmetteur n'envoie (S203), d'après les informations d'indication de longueur de trame, la première trame de réponse au dispositif de réseau sur le canal correspondant à l'équipement utilisateur au sein de l'ATI, comparer (S301) une longueur d'une deuxième trame de réponse à envoyer à la longueur de trame correspondant aux informations d'indication de longueur de trame ; et si la longueur de la deuxième trame de réponse est inférieure à la longueur de trame correspondant aux informations d'indication de longueur de trame, ajouter (S302) des informations de remplissage à la deuxième trame de réponse pour obtenir la première trame de réponse, afin que la longueur de la première trame de réponse soit la longueur de trame correspondant aux informations d'indication de longueur de trame.

6. Équipement utilisateur (1400) selon la revendication 5, dans lequel
le processeur (1401) est également configuré pour : si la longueur de la deuxième trame de réponse est supérieure à la longueur de trame correspondant aux informations d'indication de longueur de trame, compresser ou tronquer (S303) la deuxième trame de réponse pour obtenir la première trame de réponse, afin que la longueur de la première trame de réponse soit la longueur de trame correspondant aux informations d'indication de longueur de trame.

7. Équipement utilisateur (1400) selon l'une quelconque des revendications 5 et 6, dans lequel les informations d'indication de longueur de trame sont situées dans un champ réservé ou un élément d'information prédéfini dans la trame de demande.

8. Équipement utilisateur (1400) selon l'une quelconque des revendications 5 et 6, dans lequel la trame de demande est n'importe quelle trame parmi une trame de gestion, une trame d'autorisation, une trame de sondage, une trame d'acquittement, ACK, et une trame de demande d'envoi, RTS ; et
la première trame de réponse est n'importe quelle trame parmi une trame de demande de période de service, SPR, une trame Prêt à émettre, CTS, et une trame ACK.

9. Dispositif de réseau (1700), comprenant un processeur (1701), un transmetteur (1702) et un récepteur (1703), le processeur étant connecté au transmetteur, et le processeur étant également connecté au récepteur ;
le processeur (1701) étant configuré pour déterminer (S201) un canal correspondant à un équipement utilisateur au sein d'un intervalle de transmission d'annonce, ATI, IEEE 802.11 ;
le transmetteur (1702) étant configuré pour envoyer (S202) une trame de demande à l'équipement utilisateur sur le canal correspondant à l'équipement utilisateur au sein de l'ATI, la trame de demande comprenant des informations d'indication de longueur de trame ; et
le récepteur (1703) étant configuré pour recevoir (S203), sur le canal correspondant à l'équipement utilisateur au sein de l'ATI, une première trame de réponse envoyée par l'équipement utilisateur d'après les informations d'indication de longueur de trame, une longueur de la première trame de réponse étant une longueur de trame correspondant aux informations d'indication de longueur de trame ;
**caractérisé en ce que**
la première trame de réponse est une trame de réponse obtenue par l'équipement utilisateur par l'ajout (S302) d'informations de remplissage à une deuxième trame de réponse à envoyer lorsqu'une longueur de la deuxième trame de réponse est inférieure à la longueur de trame correspondant aux informations d'indication de longueur de trame.

10. Dispositif de réseau (1700) selon la revendication 9, dans lequel les informations d'indication de longueur de trame sont situées dans un champ réservé ou un élément d'information prédéfini dans la trame de demande.

11. Dispositif de réseau (1700) selon l'une quelconque des revendications 9 et 10, dans lequel la trame de demande est n'importe quelle trame parmi une trame de gestion, une trame d'autorisation, une trame de sondage, une trame d'acquittement, ACK, et une trame de demande d'envoi, RTS ; et
la trame de réponse est n'importe quelle trame parmi une trame de demande de période de service, SPR, une trame Prêt à émettre, CTS, et une trame ACK.
